# EUROPÄISCHE PATENTSCHRIFT

(11) **EP 0 436 830 B1**
(45) Veröffentlichungstag und Bekanntmachung des Hinweises auf die Patenterteilung: **16.08.1995**
(21) Anmeldenummer: 90123179.5
(22) Anmeldetag: 04.12.1990
(51) Int. Cl.: F16B 15/06, E02D 17/20

(54) **Nagel zum Eintreiben in vorgebohrte Löcher in hartem Material**
Nails for driving into predrilled holes in hard materials
Clous pour enfoncer dans des trous préforés dans des matériaux durs

(30) Priorität: 12.01.1990 DE 9000295 U
(43) Veröffentlichungstag der Anmeldung: 17.07.1991
(73) Patentinhaber: ROCKENFELLER GmbH & Co. KG, D-57271 Hilchenbach (DE)
(72) Erfinder: Rockenfeller, Gottfried, W-5912 Hilchenbach (DE); Rockenfeller, Wolfgang, W-5912 Hilchenbach-Helberhausen (DE)
(74) Vertreter: Müller, Gerd, Dipl.-Ing.

(56) Entgegenhaltungen:
- DE-A- 3 620 372
- DE-U- 9 000 295
- FR-A- 2 103 921
- GB-A- 2 021 227

## Beschreibung

Die Erfindung betrifft einen Nagel zum Eintreiben in vorgebohrte Löcher in hartem Material, wie Stein, Beton oder dergl. insbesondere zur Verankerung von Sicherungs-Mattenbelägen für Erd- und Humusaufschüttungen bei der Regeneration des Bodenbewuches an felsigen Hängen, mit einem Kopf am einen und einer Spitze am anderen Ende des Schaftes, der zumindest über einen an die Spitze anschließenden Teil der Schaftlänge mit am Schaftumfang ausgeformten Verankerungs-Aufrauhungen versehen ist.

Zur Verankerung von Sicherungs-Mattenbelägen für Erd- und Humusaufschüttung bei der Regeneration des Bodenbewuches an felsigen Hängen wird neuerdings eine Befestigungstechnologie angewandt, die auf der Benutzung von Felsnägeln basiert, welche dabei Ausbildungsmerkmale von Nägel aufweisen, wie sie nach DE-A-35 16 479 zum Eintreiben in vorgebohrte Löcher an Bauteilen aus hartem Material, wie Stein, Beton, Kalkstandstein oder dergl. zum Stand der Technik gehören. Hierbei erstrecken sich die am Schaftumfang ausgeformten Verankerungs-Aufrauhungen von dem die Spitze aufweisenden Ende aus über einen Schaftabschnitt, dessen Länge größer als die halbe Schaftlänge bemessen ist.

Die Benutzung solcher Nägel als sog. Felsnägel zur Verankerung von Sicherungs-Mattenbelägen für Erd- und Humusaufschüttungen bei der Regeneration des Bodenbewuches an felsigen Hängen oder dergl. unterliegt jedoch Bedingungen, die in erheblichem Maße von den Kriterien abweichen, welche beim Eintreiben in vorgefertigte Bauteile aus hartem Material, wie Stein, Beton, Kalksandstein oder dergl. gegeben sind.

Abgesehen davon, daß der gewachsene Fels keine gleichmäßige Struktur aufweist und auch sehr unterschiedliche Oberflächengestalt hat, fallen auch die aufgebrachten Erd- und Humusaufschüttungen zumindest hinsichtlich ihrer Schichtdicke sehr variabel aus. Deshalb ist es auch unumgänglich, als Verankerungsmittel für die Sicherungs-Mattenbeläge Felsnägel mit sehr unterschiedlicher Baulänge in Benutzung zu nehmen. Dabei ist es jedoch wichtig, daß die Felsnägel keinen übermäßig hohen Eintreibwiderstand haben, weil sie sonst beim Eintreibvorgang in unerwünschter Weise krumm würden. Andererseits sollen sie jedoch in jedem Falle einen lockerungssicheren Sitz in den vorgebohrten Löchern des gewachsenen Felsens erhalten.

Der GB-A-20 21 227 ist ein Schraubnagel zum Eintreiben in Holz oder ähnliches - also relativ weiches - Material zu entnehmen, der nicht zum Eintreiben in vorgebohrte Löcher bestimmt ist, sondern vielmehr unmittelbar in das Holzmaterial eingeschlagen wird. Dieser bekannte Schraubnagel weist zwar zumindest über einen an die Spitze anschließenden Teil der Schaftlänge ein am Schaftumfang ausgeformtes Verankerungs-Gewinde auf und ist zwischen dem Kopf und dem die Verankerungs-Aufrauhungen aufweisenden Schaftabschnitt mit einem glatten Schaftabschnitt versehen, der eine Länge hat, die größer bemessen ist als die maximale Länge des das Verankerungsgewinde aufweisenden Schaftabschnitts.

Bei diesem bekannten Schraubnagel kommt es wesentlich darauf an, daß er sich einerseits - wie koventionelle Nägel - in das Holz eintreiben läßt - daß er sich jedoch bei Bedarf wesentlich besser als konventionelle Nägel auch wieder aus dem Holz - nach Art einer konventionellen Schraube - herausnehmen läßt. Dabei soll zugleich die Haltekraft des in das Holz eingebrachten Schraubnagels größer sein, als dies bei herkömmlichen Nägeln der Fall ist, es soll aber nach dem Eintreiben eine Haltekraft erreicht werden, die wenigstens annähernd einer in ein vorgebohrtes Loch eingedrehten Holzschraube entspricht.

Es leuchtet ohne weiteres ein, daß ein in Holz einzubringender Schraubnagel nach GB-A-20 21 227 sich praktisch nicht für die gleichen Einsatzzwecke nutzen läßt wie die zum Eintreiben in vorgebohrte Löcher an Bauteilen aus hartem Material ausgelegten Nägel nach DE-A-35 16 479. Um so weniger können sie daher den noch höheren Anforderungen gerecht werden, wie sie an sog. Felsnägel der gattungsgemäßen Art gestellt werden müssen.

Es wurde nun gefunden, daß den an Felsnägel zu stellenden Bedingungen weitestgehend Rechnung getragen werden kann, wenn sich erfindungsgemäß
- zwischen dem Kopf und dem die Verankerungs-Aufrauhungen aufweisenden Schaftabschnitt ein glatter Schaftabschnitt befindet, dessen Länge größer als die maximale Länge des die Verankerungs-Aufrauhungen aufweisenden Schaftabschnitts bemessen ist und einem Verhältnis zwischen 2:1 und 3:1 entspricht,
- wobei die Verankerungs-Aufrauhungen durch Sägezahnprofil-Ringwulste gebildet sind, deren Scheitelkreisdurchmesser über die gesamte Länge des die Verankerungs-Aufrauhungen aufweisenden Schaftabschnitts gleich bemessen ist,
- wobei in den die Verankerungs-Aufrauhungen enthaltenden Schaftabschnitte steil schraubenförmig um dessen Umfang verlaufende Nuten eingeformt sind,
- wobei vorzugsweise mehrere dieser Nuten gleichmäßig in Umfangsrichtung des Schaftes verteilt liegen
- und wobei der Nagel aus hochfestem, federelastischem Stahl, bspw. einer rostfreien Stahlqualität, hergestellt ist.

Im praktischen Einsatz bewährt haben sich dabei Felsnägel, bei denen der Schaft eine Gesamtlänge zwischen 120 mm und 330 mm aufweist.

Bei den aus Sägezahnprofil-Ringwulsten bestehenden Verankerungs-Aufrauhungen hat es sich bewährt, wenn deren steil geneigte Flanken den Kopf und deren flach geneigte Flanken der Spitze des Nagels zugewendet sind.

Vorgesehen ist erfindungsgemäß auch noch, daß die Tiefe der schraubenförmigen Nuten etwa gleich der geringsten Tiefe der vorhandenen Sägezahnprofil-Ringwulste bemessen ist.

Der Gegenstand der Erfindung wird nachfolgend an den in der Zeichnung dargestellten Ausführungsbeispielen erläutert. Dabei zeigen:
- Figuren 1 bis 3: Räumliche Ansichtsdarstellungen dreier Felsnägel verschiedener Baugröße,
- Figur 4: einen Schnitt entlang der Linie IV-IV in Figur 1 und
- Figur 5: im vergrößerten Maßstab den in Figur 3 mit V gekennzeichneten Auschnittbereich.

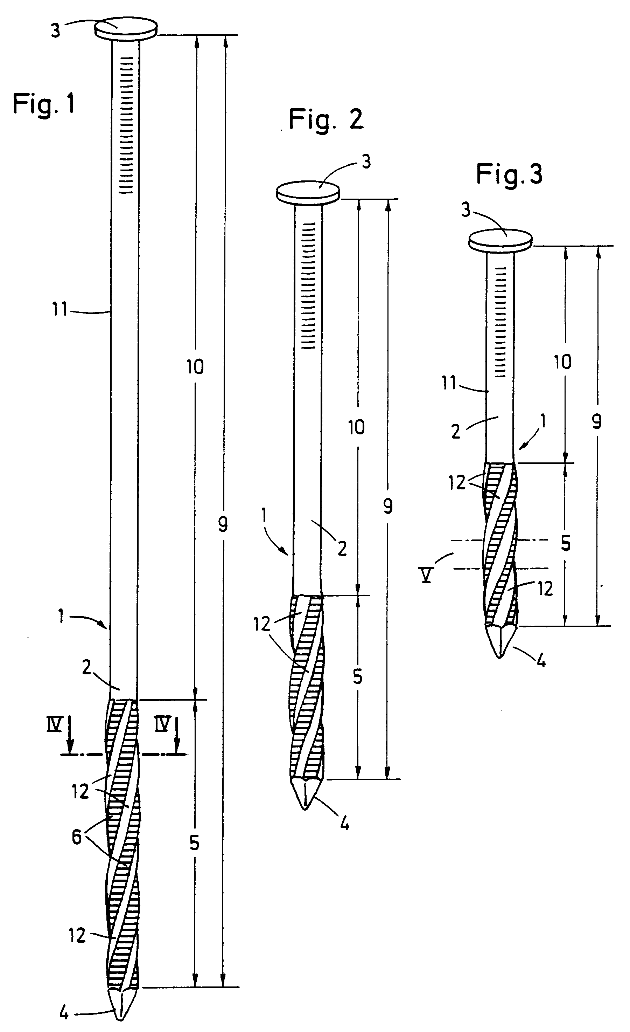

Die in den Fig. 1 bis 3 der Zeichnung dargestellten Nägel 1 weisen einen Schaft 2 auf, an dessen eines Ende ein flacher, relativ breiter Kopf 3 angeformt ist, während sein anderes Ende eine Spitze 4 aufweist.

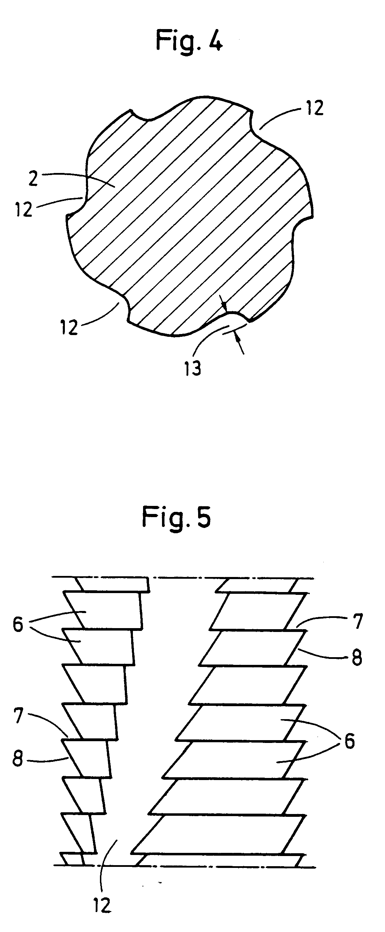

Der Umfang des Schaftes 2 weist über einen an die Spitze 4 anschließenden Teilabschnitt 5 seiner Länge Verankerungs-Aufrauhungen 6 in Form von Sägezahnprofil-Ringwulsten auf, welche vorzugsweise in Form eines Sägezahnprofil-Gewindes ausgeformt sind, wie es besonders deutlich in Fig. 5 der Zeichnung zu sehen ist. Jeder Sägezahnprofil-Ringwulst des Sägezahnprofil-Gewindes weist eine dem Kopf 3 zugewendete, steil geneigte Flanke 7 und eine der Spitze 4 zugewendete, flach geneigte Flanke 8 auf, wie das ebenfalls deutlich aus Fig. 5 hervorgeht.

Der die Verankerungs-Aufrauhungen 6 aufweisende Längenabschnitt 5 erstreckt sich jeweils nur über einen Bruchteil der Gesamtlänge 9 des Schaftes 2 und zwar dergestalt, daß das übrige Längenteilstück 10 des Schaftes 2 einen glatten Schaftabschnitt 11 bildet.

Der in Fig. 1 der Zeichnung dargestellte Felsnagel 1 mit der größten vorkommenden Gesamtlänge 9 des Schaftes ist so ausgeführt, daß der glatte Schaftabschnitt 11 sich über ein Längenteilstück 10 erstreckt, der zu dem mit den Verankerungs-Aufrauhungen 6 ausgestatteten Längenabschnitt 5 in einem Längenverhältnis von etwa 3:1 steht.

Hat also der Felsnagel 1 eine Gesamtlänge 9 des Schaftes von bspw. 330 mm, dann weist der mit den Verankerungs-Aufrauhungen 6 versehene Längenabschnitt 5 eine Längenabmessung zwischen 80 und 85 mm auf, während der glatte Schaftabschnitt 11 eine Länge zwischen 245 und 250 mm hat.

Bei dem Felsnagel 1 mittlerer Länge, wie er in Fig. 2 der Zeichnung gezeigt wird, steht das Längenteilstück 10 des glatten Schaftabschnitts 11 zum Längenabschnitt 5 des die Verankerungs-Aufrauhungen 6 aufweisenden Schaftabschnitts in einem Längenverhältnis von etwa 2:1.

Wenn dabei angenommen wird, daß der Felsnagel 1 mittlerer Baugröße eine Gesamtlänge 9 des Schaftes 1 von etwa 180 mm aufweist, dann ergibt sich, daß der glatte Schaftabschnitt 11 sich über ein Längenteilstück 10 von 120 mm erstreckt, während der die Verankerungs-Aufrauhungen 6 aufweisende Längenabschnitt 5 dann eine Länge von etwa 60 mm hat.

Der in Fig. 3 der Zeichnung dargestellte Felsnagel 1 entspricht der kleinsten vorkommenden Baugröße. Er ist dabei so ausgeführt, daß das Längenteilstück 10 seines glatten Schaftabschnitts 11 mindestens gleich dem mit den Verankerungs-Aufrauhungen 6 versehenen Längenabschnitt 5 bemessen ist.

Wenn also die minimale Baugröße des Felsnagels 1 nach Fig. 3 eine Gesamtlänge 9 des Schaftes von 120 mm hat, dann weist das Längenteilstück 10 des glatten Schaftabschnitts 11 hier mindestens eine Längenabmessung von 60 mm auf.

Ein wesentliches Ausgestaltungsmerkmal der Felsnägel 1 nach den Fig. 1 bis 3 liegt auch noch darin, daß in den die Verankerungs-Aufrauhungen 6 enthaltenden Längenabschnitt 5 des Schaftes 2 mehrere steil schraubenförmig um den Schaftumfang verlaufende Nuten 12 eingeformt sind, die vorzugsweise einen Querschnitt haben, wie er in Fig. 4 der Zeichnung erkennbar ist.

Diese steil schraubenförmig um den Umfang des Schaftes 2 verlaufenden Nuten 12 werden dabei vorzugsweise in mehreren gleichmäßig in Umfangsrichtung verteilt angeordneten Gängen vorgesehen. In Fig. 4 der Zeichnung sind dabei sechs solcher Gänge gezeigt, deren Tiefe vorzugsweise gleich der Tiefe der jeweils als Verankerungs-Aaufrauhungen 6 vorhandenen Sägezahnprofil-Ringwulste bzw. Sägezahnprofil-Gewinde bemessen werden sollte.

Die Felsnägel 1 werden aus hochfestem, federelastischem Stahl hergestellt, wobei es sich in vielen Fällen empfiehlt, zur Sicherung einer langen Lebensdauer eine rostfreie Stahlqualität einzusetzen.

Da die Felsnägel 1, bezogen auf ihre jeweilige gesamte Schaftlänge 9, nur auf einem relativ kurzen Längenabschnitt 5 Verankerungs-Aufrauhungen 6 in Form von Sägezahnprofil-Ringwulsten bzw. Sägezahnprofil-Gewinden aufweisen, lassen sie sich mit relativ geringem Widerstand in vorgebohrte Löcher des Gewachsenen Felsens sicher eintreiben, ohne daß hierbei ein unerwünschtes Krummwerden derselben befürchtet werden muß. Trotzdem läßt sich aber auch für die Felsnägel großer Gesamtlänge 9 des Schaftes ein dauerhaft sicherer Halt in den Verankerungs-Bohrlöchern erreichen, und zwar auch dann, wenn der größte Teil der Schaftlänge des betreffenden Felsnagels 1 innerhalb der verhältnismäßig weichen und lockeren Erd- und Humusaufschüttungen der felsigen Hänge liegt, um dort die als Abdeckungen aufgebrachten Sicherungs-Mattenbeläge zu verankern.

Es sei hier noch darauf hingewiesen, daß es sich in manchen Fällen empfiehlt, die Felsnägel 1 über den mit den Verankerungs-Aufrauhungen versehenen Längenbereich des Schaftes hinweg wellenförmig gekrümmt verlaufend auszubilden, und zwar derart, daß die Spitze 4 achsgleich oder aber zumindest achsparallel zum Kopf 3 und/oder zum glatten Schaftabschnitt 11 ausgerichtet ist. Hierdurch ist es möglich, die Felsnägel 1 auch noch in einem Bohrloch sicher zu verankern, dessen Ist-Durchmesser gegenüber dem vorgesehenen Soll-Durchmesser größer ausfällt. Durch die Wellenform wird auch hier noch eine Verankerung mit genügend hoher Ausziehfestigkeit erreicht.

Bei Ausbildung der Verankerungs-Aufrauhungen als Sägezahnprofil-Gewinde ist es üblicherweise so, daß die Sägezahnprofile über den gesamten Längenabschnitt 5 hinweg mit gleichem bzw. übereinstimmendem Steigungs- bzw. Teilungsabstand vorgesehen sind. Werden jedoch als Verankerungs-Aufrauhungen 6 in sich geschlossene Sägezahnprofil-Ringwulste verwendet, dann besteht hier auch die Möglichkeit, diese über den Längenabschnitt 5 hinweg mit unterschiedlichem Teilungsabstand vorzusehen. Vorzugsweise befindet sich dabei der kleine Teilungsabstand in der Nähe der Spitze 4, während die größeren Teilungsabstände dem Kopf 3 näherliegen.

## Patentansprüche

1. Nagel (1) zum Eintreiben in vorgebohrte Löcher in hartem Material, wie Stein, Beton oder dergleichen, insbesondere zur Verankerung von Sicherungs-Mattenbelägen für Erd- und Humusaufschüttungen bei der Regeneration des Bodenbewuchses an felsigen Hängen, mit einem Kopf (3) am einen und einer Spitze (4) am anderen Ende des Schaftes (2), der zumindest über einen an die Spitze (4) anschließenden Teil (5) der Schaftlänge (9) mit am Schaftumfang ausgeformten Verankerungs-Aufrauhungen (6) versehen ist,
- wobei sich zwischen dem Kopf (3) und dem die Verankerungs-Aufrauhungen (6) aufweisenden Schaftabschnitt (5) ein glatter Schaftabschnitt (11) befindet, dessen Länge (10) größer als die maximale Länge des die Verankerungs-Aufrauhungen (6) aufweisenden Schaftabschnitts (5) bemessen ist und einem Verhältnis zwischen 2:1 und 3:1 entspricht,
- wobei die Verankerungs-Aufrauhungen (6) durch Sägezahnprofil-Ringwulste gebildet sind, deren Scheitelkreisdurchmesser über die gesamte Länge des die Verankerungs-Aufrauhungen (6) aufweisenden Schaftabschnitts (5) gleich bemessen ist,
- wobei in den die Verankerungs-Aufrauhungen (6) enthaltenden Schaftabschnitte (5) steil schraubenförmig um dessen Umfang verlaufende Nuten (12) eingeformt sind,
- wobei vorzugsweise mehrere dieser Nuten (12) gleichmäßig in Umfangsrichtung des Schaftes (2) verteilt liegen
- und wobei der Nagel (1) aus hochfestem, federelastischem Stahl, bspw. einer rostfreien Stahlqualität, hergestellt ist.

2. Nagel nach Anspruch 1,
**dadurch gekennzeichnet,**
daß der Schaft (2) eine Gesamtlänge (9) zwischen 120 mm und 330 mm aufweist.

3. Nagel nach einem der Ansprüche 1 und 2,
**dadurch gekennzeichnet,**
daß die Verankerungs-Aufrauhungen (6) aus Sägezahnprofil-Ringwulsten bestehen, deren steil geneigten Flanken (7) dem Kopf (3) und deren flach geneigte Flanken (8) der Spitze (4) zugewendet sind.

4. Nagel nach einem der Ansprüche 1 bis 3,
**dadurch gekennzeichnet,**
daß die Tiefe (13) der schraubenförmigen Nuten (12) etwa gleich der geringsten Tiefe der vorhandenen Sägezahnprofil-Ringwulste bemessen ist.

## Claims

1. Nail (1) for driving into predrilled holes in hard materials, such as stone, concrete or similar materials, particularly for the anchoring of protective mat coverings for earth and humus fills used in the regeneration of vegetation cover on rocky slopes, comprising a head (3) at one end and a tip (4) at the other end of the shank (2) which is provided at least on a portion (5) of the shank length ((9) adjacent the tip (4) with anchoring roughening (9) formed on the shank periphery,
- wherein a smooth shank portion (11) is situated between the head (3) and the shank portion (5) provided with the anchoring roughening (6) whose length (10) is greater than the maximum length of the shank portion (5) provided with the anchoring roughening (6) and corresponds to a ratio between 2:1 and 3:1,
- wherein the anchoring roughening (6) is formed by saw-tooth-profiled rings the diameter of whose crest circle is the same along the whole length of the shank portion (5) provided with the anchoring roughening (6),
- wherein grooves (12) are formed in the shank portion (5) provided with the anchoring roughening (6) which extend in a steep helix around its periphery,
- wherein preferably several of these grooves (12) are distributed uniformly in the peripheral direction of the shank (2), and
- wherein the nail (1) is made of very strong, elastic steel, for instance of stainless quality.

2. Nail according to claim 1, characterised in that the total length (9) of the shank (2) is between 120 mm and 330 mm.

3. Nail according to claim 1 or 2, characterised in that the anchoring roughening (6) is formed by saw-tooth-profiled rings whose steeply inclined flanks (7) face the head (3) and whose flatly inclined flanks (8) face the tip (4).

4. Nail according to any one of claims 1 to 3, characterised in that the depth (13) of the helical grooves (12) approximately equals the smallest depth of the provided saw-tooth-profiled rings.

## Revendications

1. Clou (1) destiné à être enfoncé dans des trous préforés dans des matériaux durs, tels que de la pierre, du béton ou analogue, en particulier pour ancrer des revêtements en nattes de protection pour des remblais de terre et d'humus lors de la régénération des végétaux du sol sur des pentes rocheuses, présentant une tête (3) en une extrémité d'une tige (2) et une pointe (4) en l'autre extrémité et étant pourvu, au moins sur une section (5) de la longueur de la tige (2) qui prolonge la pointe (4), de parties rugueuses d'ancrage (6) moulées sur le pourtour de la tige, pour lequel
- on prévoit entre la tête (3) et la section (5) de tige présentant les parties rugueuses d'ancrage (6), une partie de tige lisse (11) dont la longueur (10) est supérieure à la longueur maximale de la section (5) de tige présentant les parties rugueuses d'ancrage (6) et correspond à une rapport compris entre 2:1 et 3:1,
- les parties rugueuses d'ancrage (6) étant formées par des bourrelets annulaires à profil en dents de scie dont le diamètre du cercle vertical est identique sur toute la longueur de la section (5) de tige présentant les parties rugueuses d'ancrage (6),
- la section de tige (5) présentant les parties rugueuses d'ancrage (6) comportant des rainures (12) qui s'étendent sur son pourtour en forme de vis,
- plusieurs de ces rainures (12) étant de préférence réparties régulièrement sur le pourtour de la tige (2) et
- le clou (1) étant fabriqué à partir d'acier à ressort très solide, par exemple une qualité d'acier inoxydable.

2. Clou selon la revendication 1, caractérisé en ce que la tige (2) présente une longueur totale (9) comprise entre 120 mm et 330 mm.

3. Clou selon une quelconque des revendications 1 et 2, caractérisé en ce que les parties rugueuses d'ancrage (6) sont constituées par des bourrelets annulaires à profil en dent de scie dont les flancs fortement inclinés (7) sont tournés vers la tête (3) et dont les flancs à faible inclinaison (8) sont tournés vers la pointe (4) du clou.

4. Clou selon une quelconque des revendications 1 à 3, caractérisé en ce que la profondeur (13) des rainures (12) en forme de vis correspond environ à la profondeur la plus faible des bourrelets annulaires à profil en dent de scie.
